# NEUE EUROPÄISCHE PATENTSCHRIFT

(11) **EP 0 807 756 B2**
(45) Veröffentlichungstag und Bekanntmachung des Hinweises auf die Entscheidung über den Einspruch: **16.03.2005**
(45) Hinweis auf die Patenterteilung: 05.07.2000
(21) Anmeldenummer: 97104608.1
(22) Anmeldetag: 18.03.1997
(51) Int. Cl.: F02M 31/20

(54) **Kraftstoffleitungssystem**
Fuel conduit
Conduit à carburant

(30) Priorität: 17.05.1996 DE 19619934
(43) Veröffentlichungstag der Anmeldung: 19.11.1997
(73) Patentinhaber: Bayerische Motoren Werke Aktiengesellschaft, 80788 München (DE)
(72) Erfinder: Günther, Tuschl, 83059 Kolbermoor (DE); Christian, Treml, 81475 München (DE)

(56) Entgegenhaltungen:
- EP-A- 0 038 710
- WO-A-94/23257
- CH-A- 606 958
- DE-A- 3 800 296
- DE-C- 4 141 689
- FR-A- 1 479 486
- GB-A- 2 018 890
- US-A- 2 969 110
- US-A- 3 294 148
- US-A- 4 491 117
- US-A- 5 251 603
- PATENT ABSTRACTS OF JAPAN vol. 15, no. 182 (M-1111), 10.Mai 1991 & JP 03 043653 A (NIPPONDENSO), 25.Februar 1991,
- Ersatzteilkatalog Volvo 760 series; 1988 and drawings PV200 41611 and PV233 45988

## Beschreibung

Die Erfindung betrifft ein Kraftfahrzeug gemäß dem Oberbegriff des Anspruchs 1.

Aus der WO-A-94/23257 ist bereits ein Kraftfahrzeug mit einem Motor und einem Kraftstoffbehälter bekannt, bei dem zwischen dem Motor und dem Kraftstoffbehälter ein Kraftstoffleitungssystem angeordnet ist. Das Kraftstoffleitungssystem weist eine Vorlauf- und eine Rücklaufleitung auf. Ein Abschnitt des bekannten Kraftstoffleitungssystems ist mit mindestens einem Abschnitt einer wärmeleitfähigen Oberflächenvergrößerung zur Luftkühlung des in den Kraftstoffleitungen strömenden Kraftstoffes versehen. Die bekannte wärmeleitfähige Oberflächenvergrößerung besteht aus Kühlrippen, die aus einem Leichtmetall hergestellt sind.

Aus der DE-OS 37 04 215 ist bereits ein Strangpreßprofilrohr für Wärmeaustauscher bekannt, das aus mindestens zwei Profilhälften zusammengesetzt ist, die entlang zweier äußerer Längsränder dicht miteinander verbunden sind. Das Strangpreßprofilrohr kann innen und/oder außen mit die Wärmeaustauschfläche vergrößernden Elementen versehen sein. Diese Elemente können z. B. aus Längsrippen oder aus vorzugsweise in Längsreihen aufeinanderfolgenden einzelnen Zungen, Flügeln oder Vorsprüngen bestehen, die durch Einschnitte in Längsrippen und durch Abbiegen, Drehen oder dergleichen gebildet werden. Ferner können an dem Strangpreßprofilrohr Haltemittel vorgesehen sein, die zur Befestigung von die Wärmeaustauschfläche vergrößernden Elementen, z. B. zickzackförmigen Lamellen, dienen und die gleichzeitig eine gute Wärmeleitung vom Rohr zur Lamelle gewährleisten. Das Strangpreßprofilrohr ist vor allem für Wärmeaustauscher, z. B. für Kühler von Kraftfahrzeugen, bestimmt. Bei diesen Wärmetauschern wird das Kühlwasser des Motors durch den Fahrtwind und/oder durch einen Ventilator abgekühlt.

Bei zukünftigen Motoren kann es aufgrund des Einsatzes neuer Techniken zu einer massiven Erhöhung der Kraftstofftemperatur kommen, die beispielsweise 50 % über der bislang maximalen Kraftstofftemperatur liegt. Bei den dann erreichten Kraftstofftemperaturen, die überwiegend oberhalb von 100 °C liegen, kommt es jedoch zu Problemen mit Kraftstoffbehältern aus Kunststoff und/oder den im Kraftstoffbehälter befindlichen Zusatzeinrichtungen, die Kunststoff-Bauteile enthalten. Bisher verwendete Systeme zur Kraftstoffkühlung sind jedoch aufwendig und teuer.

Aufgabe der Erfindung ist es, ein Kraftfahrzeug zu schaffen, bei dem in einfacher Weise eine Kraftstoffkühlung möglich ist.

Diese Aufgabe wird durch die Merkmale des Anspruchs 1 gelöst.

Bei dem erfindungsgemäßen Kraftfahrzeug erfolgt eine Luftkühlung des in den Kraftstoffleitungen befindlichen Kraftstoffes dadurch, daß als gemeinsame Oberflächenvergrößerung für die Vorlauf- und die Rücklaufleitung ein Wärmeleitblech oder eine als Strangpress profil ausgebildete Querschnittserhöhung der Leitung vorgesehen ist, die nur abschnittsweise ausgebildet ist. Die wärmeleitfähige Oberflächenvergrößerung ist an der Außenoberfläche der Karosserie eines Kraftfahrzeuges, insbesondere am Bodenblech, angeordnet.

Die Oberflächenvergrößerung erfolgt in einer Ausführungsform durch die Ausbildung von Zusatzflächen, d. h. von Bauteilen wie Rippen, die von der Kraftstoffleitung abstehen und/oder von Wärmeleitblechen, die mit der Kraftstoffleitung verbunden sind. In einer weiteren Ausführungsform kann die Oberflächenvergrößerung dadurch erfolgen, daß die Kraftstoffleitung einen größeren Querschnitt aufweist. Weitere Ausführungsformen ergeben sich durch Kombinationen der vorgenannten Möglichkeiten.

Die erfindungsgemäße Oberflächenvergrößerung ist so bemessen, daß die Temperatur des über die Rücklaufleitung zurückfließenden Kraftstoffes so weit abgekühlt ist, daß die zulässige Dauerbetriebstemperatur des Kraftstoffbehälters und/oder dessen Einbaueinheiten nicht überschritten wird.

Die abschnittsweise Ausbildung einer wärmeleitfähigen Oberflächenvergrößerung in Form von Strangpreßprofilrohren hat den Vorteil, daß kostengünstige Meterware verwendet werden kann. Bei der Verwendung von Wärmeleitblechen ist eine Gestaltung möglich, die zu einer Verbesserung des c_{w}-Wertes führt.

In einer anderen Ausführungsform ist es möglich, daß innerhalb der Kraftstoffleitung eine Leitung mit einem kleineren Querschnitt ausgebildet ist. Die Umschaltung von der Leitung mit dem größeren Querschnitt auf die Leitung mit dem kleineren Querschnitt und umgekehrt erfolgt beispielsweise über ein Thermostat-Ventil.

Aus akustischen Gründen ist erfindungsgemäß das Kraftstoffleitungssystem durch eine entsprechende Befestigungsart akustisch von der Karosserie des Kraftfahrzeuges entkoppelt.

Ausführungsformen der Erfindung werden nachstehend anhand der Zeichnungen beispielshalber beschrieben. Dabei zeigen:
- Fig. 1: eine Prinzipdarstellung von der Seite eines Kraftstoffleitungssystems, das eine wärmeleitfähige Oberflächenvergrößerung aufweist, die an der Unterseite einer Karosserie eines Kraftfahrzeuges befestigt ist,
- Fig. 2: eine perspektivische Schnittansicht einer Strangpreßprofitrohneitung mit einer Vorlaufleitung und zwei unterschiedlich großen Rücklaufleitungen,
- Fig. 3: eine perspektivische Schnittansicht einer Vorlauf- und einer Rücklaufleitung. die in einem Wärmeleitblech befestigt sind und
- Fig. 4: eine perspektivische Schnittansicht einer Vorlauf- und einer Rücklaufleitung, an denen jeweils Abschnitte eines Wärmeleitbleches angeordnet sind.

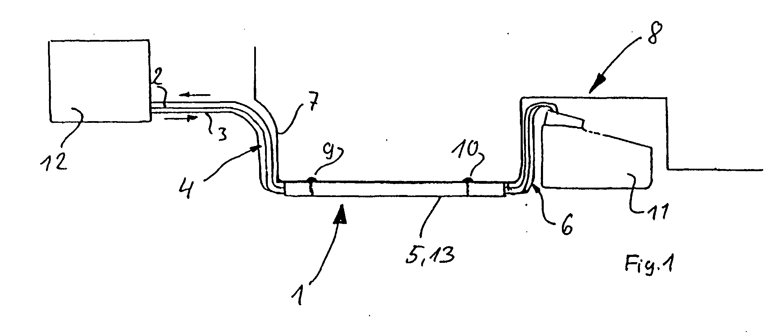

Die Fig. 1 zeigt ein Kraftstoffleitungssystem 1, das aus mindestens einer Vorlaufleitung 2 und mindestens einer Rücklaufleitung 3 besteht. Das Kraftstoffleitungssystem 1 ist in der in der Fig. 1 dargestellten Ausführungsform in drei Abschnitte 4, 5, 6 unterteilt. Der vordere und hintere Abschnitt 4 und 6 ist in der Regel als ein Schlauch ausgebildet, der beispielsweise ein Elastomerschlauch sein kann. Der mittlere Abschnitt 5 dient zur Kühlung insbesondere des in der Rücklaufleitung 3 enthaltenen Kraftstoffes. Der mittlere Abschnitt 5 ist an der Unterseite bzw. dem Bodenblech 7 der Karosserie 8 eines Kraftfahrzeuges beispielsweise über Klipse 9 und 10 akustisch entkoppelt befestigt. Das Kraftstoffleitungssystem 1 fördert den Kraftstoff aus einem Kraftstoffbehälter 11 über die Vorlaufleitung 2 zu einem Motor 12. Der nicht vom Motor 12 verbrauchte Kraftstoff ist sehr heiß und wird über die Rücklaufleitung 3 zum Kraftstoffbehälter 11 zurückbefördert. Der mittlere Abschnitt 5 ist mit einer wärmeleitfähigen Oberflächenvergrößerung 13 versehen. Ausführungsformen einer solchen Oberflächenvergrößerung 13 sind in den Fig. 2 bis 5 dargestellt.

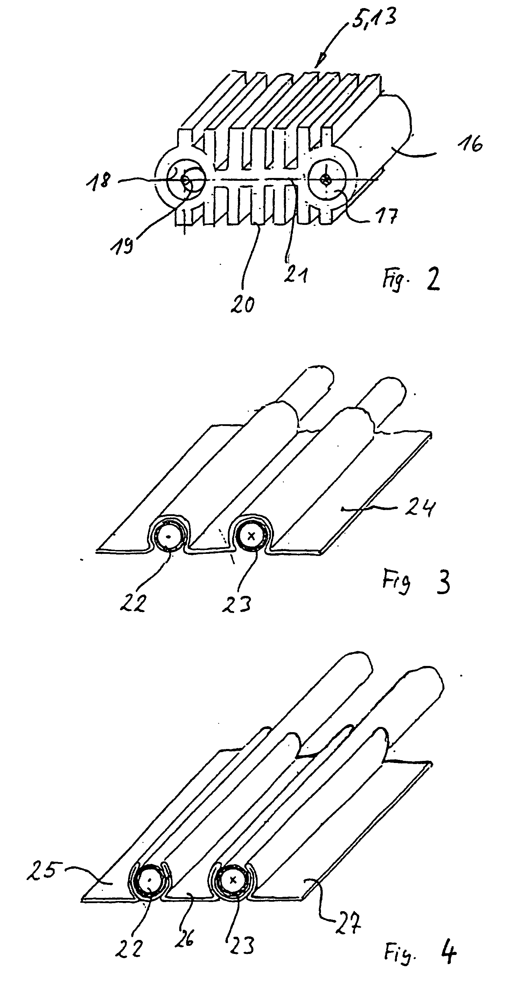

In der Fig. 2 ist eine perspektivische Schnittansicht einer Oberflächenvergrößerung 13 dargestellt, die als ein Strangpreßrohrprofil 16 ausgebildet ist. Das Strangpreßrohrprofil 16 weist zwei Leitungen 17 und 18 auf, in denen der Kraftstoff vor- oder zurückläuft. In der Rücklaufleitung 18 ist eine zweite Leitung 19 mit einem kleineren Querschnitt in Kontakt mit der Oberflächenvergrößerung 13 angeordnet. Durch die Leitungen 17, 19 strömt zunächst der kalte Kraftstoff, bis der Kraftstoff seine Betriebstemperatur erreicht hat. Dann wird über ein temperaturabhängiges Ventil die Leitung 18 dazugeschaltet, wobei der Kraftstoff dann durch beide Leitungen 18, 19 oder nur durch die größere Leitung 18 fließen kann. Die Oberflächenvergrößerung 13 der Fig. 3 besteht aus Längsrippen 20, die einstückig an einem Quersteg 21 ausgebildet sind.

Die Vor- und Rücklaufleitungen 17, 18, 19 sind als ein gemeinsames Profil hergestellt. Aus der Fig. 2 geht in bezug auf die Leitungen 18 und 19 ferner hervor, daß die Oberflächenvergrößerung 13 durch eine Querschnittserhöhung der Normalleitung 19 in bezug auf die vergrößerte Leitung 18 erfolgen kann. Neben der Oberflächenvergrößerung 13 hat die Querschnittserhöhung den weiteren Effekt, daß der in der Kraftstoffleitung befindliche Kraftstoff bei einem größeren Querschnitt langsamer durch die Leitung fließt, so daß die Verweildauer des Kraftstoffes in dem Kühlungsabschnitt 5 erhöht ist und somit mehr Wärme an die Umgebung abgestrahlt werden kann. Die Anschlüsse von dem Strangpreßrohrprofil 16 zu den vorderen und hinteren Abschnitten 4 und 5 erfolgt über eingepreßte bzw. eingeschraubte Stutzen.

Die Fig.3 und 4 zeigen eine Ausführungsform des Kühlungsabschnittes 5, bei dem die wärmeleitfähigen Leitungen 22 und 23 von einem Wärmeleitblech 24 oder mehreren Wärmeleitblechen 25, 26, 27 umgeben sind. Die Wärmeleitbleche 24; 25, 26, 27 sind gleichzeitig als c_{w}-Wert-Abdeckung der Unterseite 7 der Karosserie 8 eines Kraftfahrzeuges einsetzbar. Wie bei dem Strangpreßrohrprofil 16 sind auch die Wärmeleitbleche 24; 25, 26, 27 sowie die darin angeordneten Leitungen 22, 23 akustisch entkoppelt an der Karosserie 8 befestigt.

## Patentansprüche

1. Kraftfahrzeug mit einem Kraftstoffleitungssystem (1), das mindestens eine Vorlauf- und mindestens eine Rücklaufleitung (2, 3) aufweist, die jeweils zwischen einem Motor (12) und einem Kraftstoffbehälter (11) des Kraftfahrzeuges an der Außenoberfläche der Karosserie (8), insbesondere am Bodenblech (7), akustisch entkoppelt angeordnet sind, wobei das Kraftstoffleitungssystem (1) mindestens einen Abschnitt (5) mit einer wärmeleitfähigen Oberflächenvergrößerung (13) zur Luftkühlung des Kraftstoffes aufweist, wobei die Oberflächenvergrößerung (13) in Abhängigkeit von den fahrzeugspezifischen Werten so bemessen ist, dass der in den Kraftstoffbehälter (11) zurückfließende Kraftstoff auf eine zulässige Betriebstemperatur abgekühlt ist, und wobei die wärmeleitfähige Oberflächenvergrößerung (13) aus von der Leitung (17, 18, 19) abstehenden Elementen (20, 21) besteht, die aus einem Leichtmetall hergestellt sind, **dadurch gekennzeichnet, dass** als gemeinsame Oberflächenvergrößerung (13) für die Vorlauf- und die Rücklaufleitung (2,3) ein Wärmeleitblech (24; 25, 26, 27) oder eine als Strangpressprofil (16) ausgebildete Querschnittserhöhung der Leitung vorgesehen ist.

2. Kraftstoffleitungssystem nach Anspruch 1, **dadurch gekennzeichnet, dass** die als Oberflächenvergrößerung (13) dienende Leitung (18) temperaturabhängig zu- oder abschaltbar ist.

3. Kraftstoffleitungssystem nach einem der Ansprüche 1 oder 2, **dadurch gekennzeichnet, dass** das Wärmeleitblech (24; 25, 26, 27) aus einem oder mehreren Blechen gebildet ist.

## Claims

1. A motor vehicle comprising a fuel piping system (1) containing at least one flow pipe (2) and at least one return pipe (3), each acoustically uncoupled and disposed on the outer surface of the body (8), especially on the floor panel (7), between an engine (12) and a fuel tank (11) belonging to the vehicle, wherein the fuel piping system (1) has at least one portion (5) comprising a heat-conducting enlarged surface (13) for cooling the fuel in air, wherein the enlarged surface (13) is so dimensioned, depending on values specific to the vehicle, that the fuel flowing back to the tank (11) is cooled to a permissible operating temperature, and wherein the heat-conducting enlarged surface (13) is made up of elements (20, 21) which project from the pipe (17, 18, 19) and are made of light metal, **characterised in that** a common enlarged surface for the flow pipe (2) and the return pipe (3) is provided in the form of a heat-conducting plate (24; 25, 26, 27) or an increased cross-section of the pipe in the form of an extruded profile (16).

2. A fuel piping system according to claim 1,
**characterised in that** the pipe (18) serving as an enlarged surface (13) can be connected or disconnected in dependence on temperature.

3. A fuel piping system according to claim 1 or claim 2,
**characterised in that** the heat-conducting fin (24; 25, 26, 27) is made up of one or more metal plates.

## Revendications

1. Véhicule automobile équipé d'un système de conduites de carburant (1) ayant au moins une conduite d'alimentation et une conduite de retour (2, 3) respectivement installées entre le moteur (12) et le réservoir de carburant (11) du véhicule, à la surface extérieure de la carrosserie (8), notamment contre la tôle de plancher (7) en étant désaccouplées acoustiquement,
le système de conduite de carburant (1) ayant au moins un segment (5) avec une surface agrandie (13) thermoconductrice pour refroidir le carburant par l'air,
l'augmentation de surface (13) étant dimensionnée suivant les valeurs spécifiques du véhicule pour que le carburant de retour au réservoir (11) soit refroidi à une température de fonctionnement autorisée, alors que
l'augmentation de surface thermoconductrice (13) est composée d'éléments (20, 21) en saillie de la conduite (17, 18, 19), et fabriqués en métal léger,
**caractérisé en ce que**
l'augmentation de surface commune (13) de la conduite d'alimentation et de la conduite de retour (2, 3) est constituée par une tôle thermoconductrice (24, 25, 26, 27) ou par une augmentation de section de la conduite en forme de profilé extrudé à la presse (16).

2. Système de conduite de carburant selon la revendication 1,
**caractérisé en ce que**
la conduite (18) assurant l'augmentation de surface (13) peut être coupée ou branchée en fonction de la température.

3. Système de conduite de carburant selon l'une des revendications 1 ou 2,
**caractérisé en ce que**
la tôle thermoconductrice (24, 25, 26, 27) est constituée d'une ou plusieurs tôles.
